(19) Europäisches Patentamt
European Patent Office
Office européen des brevets

(11) **EP 3 602 675 B1**

(12) **EUROPÄISCHE PATENTSCHRIFT**

(45) Veröffentlichungstag und Bekanntmachung des Hinweises auf die Patenterteilung:
**12.05.2021 Patentblatt 2021/19**

(21) Anmeldenummer: **18726326.4**

(22) Anmeldetag: **28.03.2018**

(51) Int Cl.:
***H01M 10/48*** *(2006.01)*

(86) Internationale Anmeldenummer:
**PCT/EP2018/057871**

(87) Internationale Veröffentlichungsnummer:
**WO 2018/178131 (04.10.2018 Gazette 2018/40)**

(54) **VERFAHREN UND VORRICHTUNG ZUM BETRIEB EINES ELEKTRISCHEN ENERGIESPEICHERSYSTEMS SOWIE ELEKTRISCHES ENERGIESPEICHERSYSTEM UND VERWENDUNG DESSELBEN**

METHOD AND APPARATUS FOR OPERATING AN ELECTRICAL ENERGY STORAGE SYSTEM AND ELECTRICAL ENERGY STORAGE SYSTEM AND USE THEREOF

PROCÉDÉ ET DISPOSITIF POUR FAIRE FONCTIONNER UN SYSTÈME ACCUMULATEUR D'ÉNERGIE ÉLECTRIQUE ET SYSTÈME ACCUMULATEUR D'ÉNERGIE ÉLECTRIQUE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2017 DE 102017205175**

(43) Veröffentlichungstag der Anmeldung:
**05.02.2020 Patentblatt 2020/06**

(73) Patentinhaber: **Robert Bosch GmbH 70442 Stuttgart (DE)**

(72) Erfinder: **GLEITER, Andreas 70437 Stuttgart (DE)**

(56) Entgegenhaltungen:
**EP-A1- 1 688 722    US-A1- 2007 120 537**

**Beschreibung**

Die vorliegende Erfindung geht aus von einem Verfahren und einer Vorrichtung zum Betrieb eines elektrischen Energiespeichersystems sowie einem elektrischen Energiespeichersystem und dessen Verwendung gemäß dem Oberbegriff der unabhängigen Patentansprüche.

Stand der Technik

Im Zuge der zunehmenden Elektrifizierung, insbesondere des Antriebsstrangs von Fahrzeugen, werden vermehrt Batterien, welche aus mehreren Batteriezellen bestehen können, als elektrisches Energiespeichersystem eingesetzt. Um die Sicherheit und dauerhafte Betriebsfähigkeit des elektrischen Energiespeichersystems zu gewährleisten ist es meist erforderlich, Kenntnis über eine Temperatur des elektrischen Energiespeichersystems zu haben. Zu diesem Zweck werden meist ein oder mehrere Temperaturwerte für das elektrische Energiespeichersystem ermittelt. Um die Komplexität zu reduzieren, wird meist angenommen, dass die Temperaturen innerhalb des elektrischen Energiespeichersystems innerhalb gewisser Grenzen homogen sind. Weiterhin ist es für die Sicherheit des elektrischen Energiespeichersystems meist erforderlich, dass ein bestimmter Stromgrenzwert nicht überschritten wird, da dies das elektrische Energiespeichersystem schädigen kann. Dies ist insbesondere dann relevant, wenn kein aktives Kühlsystem innerhalb des Energiespeichersystems vorhanden ist, sondern passiv gekühlt wird. Da die Wärmezufuhr durch einen elektrischen Strom quadratisch mit der Stromstärke steigt, wird der Strom meist unnötig stark begrenzt.

In der Druckschrift DE 10 2013 000 220 B3 wird ein Verfahren beschrieben, um eine Temperatur in einem elektrischen Körper, insbesondere in einem Akkumulator, zu bestimmen. Zu diesem Zweck werden innerhalb des Verfahrens eine elektrische Klemmenleistung, eine elektrische Verlustleistung und eine Wärmekapazität des elektrischen Körpers eingesetzt. Die Dokumente EP1688722, DE102015001069 und DE4403468 offenbaren verschiedene Verfahren zur Ermittlung der Temperatur in einer elektrischen Batterie.

Offenbarung der Erfindung

Vorteile der Erfindung

Offenbart werden ein Verfahren und eine Vorrichtung zum Betrieb eines elektrischen Energiespeichersystems sowie ein elektrisches Energiespeichersystem und dessen Verwendung mit den kennzeichnenden Merkmalen der unabhängigen Patentansprüche, wobei das elektrische Energiespeichersystem mindestens eine elektrische Energiespeichereinheit umfasst.

Innerhalb des Verfahrens wird ein erster Temperaturwert aus einer erfassten ersten Temperaturgröße des elektrischen Energiespeichersystems ermittelt. Dies kann beispielsweise mittels eines Temperatursensors erfolgen. Weiterhin wird ein elektrischer Stromwert in Abhängigkeit des ermittelten ersten Temperaturwertes, eines zweiten Temperaturwertes, eines elektrischen Widerstandswertes, eines Wärmekapazitätswertes und einer definierten Zeitspanne ermittelt. Dabei können der zweite Temperaturwert, der elektrische Widerstandswert, der Wärmekapazitätswert und die definierte Zeitspanne beispielsweise aus einem Datenspeicher ermittelt werden, welcher diese Werte beispielsweise in vordefinierter Form enthält. Alternativ kann beispielsweise der elektrische Widerstandswert aus einem mathematischen Modell ermittelt werden, wobei dieser Wert fortlaufend aktualisiert werden kann, um mögliche Veränderungen des elektrischen Widerstands abzubilden. Weiterhin wird das elektrische Energiespeichersystem anschließend derart betrieben, dass ein in dem elektrischen Energiespeichersystem fließender elektrischer Strom den ermittelten Stromwert zumindest während einer Teilzeitspanne der definierten Zeitspanne nicht überschreitet. Somit ist in vorteilhafter Weise gewährleistet, dass das elektrische Energiespeichersystem keinen sich negativ auf die Betriebsfähigkeit auswirkenden elektrischen Strömen ausgesetzt ist, was wiederum auch die Lebensdauer des elektrischen Energiespeichersystems erhöht. Beispielsweise kann ein Stromwert für eine definierte Zeitspanne von einer Stunde ermittelt werden, wobei dann ein in dem elektrischen Energiespeichersystem fließender elektrischer Strom für beispielsweise 10 Minuten auf maximal diesen ermittelten Stromwert begrenzt wird. Somit wird beispielsweise eine übermässige Temperaturzunahme verhindert, wobei gleichzeitig kurzfristige Leistungs- bzw. Stromanforderungen dennoch erfüllt werden können. Ebenso ist denkbar, dass der in dem elektrischen Energiespeichersystem fließende elektrische Strom während der gesamten Zeitspanne den ermittelten Stromwert nicht überschreitet. Somit wird ein sehr sicherer Betrieb des elektrischen Energiespeichersystems erreicht. Weitere Beispiele für die Kombination von definierter Zeitspanne und Teilzeitspanne sind beispielsweise 10 min / 1 min, 1 min / 10 s, 1 min / 1 min oder 10 s / 10 s.

Weitere vorteilhafte Ausführungsformen der vorliegenden Erfindung sind Gegenstand der Unteransprüche.

Zweckmäßigerweise wird der zweite Temperaturwert aus einem Datenspeicher als vordefinierter Temperaturgrenzwert für die mindestens eine elektrische Energiespeichereinheit und/oder für das elektrische Energiespeichersystem ermittelt. Somit ist sichergestellt, dass durch den in Abhängigkeit des vordefinierten Temperaturgrenzwertes ermittelten Stromwert keine derartige Erwärmung des elektrischen Energiespeichersystems erfolgt, dass der vordefinierte Temperaturgrenzwert überschritten wird, was in vorteilhafter Weise die Sicherheit und Betriebsfähigkeit des elektrischen Energiespeichersystems gewährleistet.

Zweckmäßigerweise wird der elektrische Widerstandswert und/oder der Wärmekapazitätswert für die mindestens eine elektrische Energiespeichereinheit und/oder für das elektrische Energiespeichersystem ermittelt, beispielsweise aus einem Datenspeicher, in dem ein oder mehrere entsprechende Werte hinterlegt sind. Somit kann in vorteilhafter Weise bestimmt werden, ob der ermittelte Stromwert auf dem Niveau einer oder mehrerer elektrischer Energiespeichereinheiten oder für das gesamte elektrische Energiespeichersystem berechnet wird. Beispielsweise kann es bei einer Parallelschaltung von elektrischen Energiespeichereinheiten vorteilhaft sein, diese für die Ermittlung des Stromwertes zu einer Ersatzenergiespeichereinheit zusammenzufassen und für diese Ersatzenergiespeichereinheit Ersatzwerte für den Widerstand und die Wärmekapazität in der Ermittlung des elektrischen Stromwertes zu verwenden.

Zweckmäßigerweise wird vor der Ermittlung des elektrischen Stromwertes zunächst ein Wärmetransportkennwert ermittelt, welcher einen Wärmetransport innerhalb des elektrischen Energiespeichersystems kennzeichnet, beispielsweise aus einem Datenspeicher, in dem ein oder mehrere entsprechende Werte hinterlegt sind. Beispielsweise kann dies ein Wärmeübergangswiderstand an der Oberfläche einer elektrischen Energiespeichereinheit sein oder auch ein durchschnittlicher Wärmeübergangswiderstand für die oben erwähnte Ersatzenergiespeichereinheit. Anschließend erfolgt das Ermitteln des elektrischen Stromwertes in Abhängigkeit des ersten Temperaturwertes, des zweiten Temperaturwertes, des elektrischen Widerstandswertes des Wärmekapazitätswertes der definierten Zeitspanne und des so ermittelten Wärmetransportkennwertes. Somit wird der Wärmetransport innerhalb des elektrischen Energiespeichersystems beziehungsweise an die Umgebung berücksichtigt, was die Genauigkeit des ermittelten Stromwertes erhöht und somit den Betrieb des elektrischen Energiespeichersystems verbessert.

Zweckmäßigerweise wird vor der Ermittlung des elektrischen Stromwertes zunächst eine verfügbare elektrische Ladungsmenge des elektrischen Energiespeichersystems ermittelt. Dies kann beispielsweise durch eine Bestimmung des aktuellen Ladezustandes einer elektrischen Energiespeichereinheit und durch eine anschließende Differenzbildung mit einem minimal möglichen Ladezustand erfolgen, wobei die Differenz anschließend mit einem Kapazitätswert, beispielsweise der nominalen Kapazität einer elektrischen Energiespeichereinheit, multipliziert wird. Unter Verwendung des zu ermittelnden Stromwert kann die definierte Zeitspanne in Abhängigkeit der verfügbaren Ladungsmenge angegeben werden. Anschließend erfolgt das Ermitteln des elektrischen Stromwertes in Abhängigkeit des ersten Temperaturwertes, des zweiten Temperaturwertes, des elektrischen Widerstandswertes, des Wärmekapazitätswertes und der verfügbaren Ladungsmenge. Somit wird ein Stromwert ermittelt, mit dem das elektrische Energiespeichersystem bis zu einer gewissen Entladetiefe, beispielsweise bis zur Vollentladung, betrieben werden kann. Dies gewährleistet den sicheren Betrieb des elektrischen Energiespeichersystems auch ohne ständige Neuberechnung eines Stromwertes, der nicht überschritten werden darf.

Zweckmäßigerweise wird der erste Temperaturwert aus der mittels eines Temperatursensors erfassten ersten Temperaturgröße ermittelt, wobei sich der Temperatursensor innerhalb oder in direktem Kontakt mit dem elektrischen Energiespeichersystem befindet. Beispielsweise kann der Temperatursensor direkt auf der Oberfläche einer elektrischen Energiespeichereinheit angebracht sein, um deren Temperatur zu erfassen. Eine Anbringung auf einem Zellverbinder zwischen zwei elektrischen Energiespeichereinheiten ist eine weitere Möglichkeit. Somit wird eine wichtige Größe, die unmittelbar mit dem in dem elektrischen Energiespeichersystem fließenden elektrischen Strom zusammenhängt, in der Ermittlung berücksichtigt, was die Genauigkeit und Zuverlässigkeit des Verfahrens erhöht.

Zweckmäßigerweise wird das elektrische Energiespeichersystem vor der Ermittlung des ersten Temperaturwertes für einen vordefinierten Zeitraum derart angesteuert, dass in dem elektrischen Energiespeichersystem bis auf einen vordefinierten elektrischen Basisstrom kein zusätzlicher weiterer elektrischer Strom fließt. Der elektrische Basisstrom ist beispielsweise notwendig zur Versorgung eines elektrischen Steuergerätes, insbesondere eines Batteriemanagementsteuergerätes, beziehungsweise entsprechender Sensoren, beispielsweise zur Spannungs- und/oder Stromerfassung. Der vordefinierte elektrische Basisstrom umfasst beispielsweise betragsmäßig Werte in einem Bereich von 0 bis 10 A, insbesondere von 0 bis 5 A beziehungsweise 0 bis 2,5 A. Eine Erhöhung beziehungsweise Veränderung der Temperatur wird somit in vorteilhafter Weise bis auf vernachlässigbare Einflüße verhindert, wodurch sich das elektrische Energiespeichersystem beziehungsweise eine elektrische Energiespeichereinheit in einem quasi stationären Zustand bezüglich Temperaturänderungen befindet, was die Genauigkeit der Temperaturermittlung und somit der Stromwertermittlung erhöht und somit für einen zuverlässigeren und sichereren Betrieb des elektrischen Energiespeichersystem sorgt.

Zweckmäßigerweise wird eine zeitliche Temperaturänderungsrate aus der erfassten ersten Temperaturgröße ermittelt, beispielsweise unter Verwendung zweier oder mehrerer Temperaturwerte, die zu unterschiedlichen Zeitpunkten erfasst wurden. Weiterhin wird bei Unterschreiten eines vordefinierten Temperaturänderungsratenschwellenwertes durch die ermittelte zeitliche Temperaturänderungsrate der erste Temperaturwert ermittelt. Somit kann in vorteilhafter Weise festgestellt werden, ob bereits der quasi stationäre Zustand bezüglich Temperaturänderungen erreicht wurde und somit eine zuverlässige Ermittlung des ersten Temperaturwertes möglich ist. Somit wird die Zuverlässigkeit des Verfahrens erhöht.

Weiterhin wird eine Vorrichtung mit mindestens einem Mitteln zum Betrieb eines elektrischen Energiespeichersystems beschrieben, wobei das mindestens eine Mittel eingerichtet ist, die oben beschriebenen Verfahrensschritte durchzuführen. Somit können die bereits oben erwähnten Vorteile erzielt werden. Das mindestens eine Mittel kann beispielsweise ein Batteriemanagementsteuergerät und eine entsprechende Leistungselektronik, beispielsweise ein Wechselrichter, sowie Stromsensoren und Temperatursensoren umfassen. Auch eine elektronische Steuereinheit kann solch ein Mittel sein. Unter einer elektronischen Steuereinheit kann insbesondere ein elektronisches Steuergerät, welches beispielsweise einen Mikrocontroller und/oder einen applikationsspezifischen Hardwarebaustein, z.B. einen ASIC, umfasst, verstanden werden, aber ebenso kann darunter ein Personalcomputer oder eine speicherprogrammierbare Steuerung fallen.

Weiterhin wird ein elektrisches Energiespeichersystem beschrieben, welches mindestens eine elektrische Energiespeichereinheit und die oben beschriebene Vorrichtung mit Mitteln zum Betrieb des elektrischen Energiespeichersystems umfasst. Somit können die bereits oben erwähnten Vorteile für das elektrische Energiespeichersystem erzielt werden. Unter einer elektrischen Energiespeichereinheit kann insbesondere eine elektrochemische Batteriezelle und/oder ein Batteriemodul mit mindestens einer elektrochemischen Batteriezelle und/oder ein Batteriepack mit mindestens einem Batteriemodul verstanden werden. Zum Beispiel kann die elektrische Energiespeichereinheit eine lithiumbasierte Batteriezelle oder ein lithiumbasiertes Batteriemodul oder ein lithiumbasiertes Batteriepack sein. Insbesondere kann die elektrische Energiespeichereinheit eine Lithium-Ionen-Batteriezelle oder ein Lithium-Ionen-Batteriemodul oder ein Lithium-Ionen-Batteriepack sein. Weiterhin kann die Batteriezelle vom Typ Lithium-Polymer-Akkumulator, Nickel-Metallhydrid-Akkumulator, Blei-Säure-Akkumulator, Lithium-Luft-Akkumulator oder Lithium-Schwefel-Akkumulator beziehungsweise ganz allgemein ein Akkumulator beliebiger elektrochemischer Zusammensetzung sein. Auch ein Kondensator ist als elektrische Energiespeichereinheit möglich.

Weiterhin wird die Verwendung des oben beschriebenen elektrischen Energiespeichersystems in elektrisch angetriebenen Fahrzeugen einschließlich Hybridfahrzeugen, in stationären elektrischen Energiespeicheranlagen, in elektrisch betriebenen Handwerkzeugen, in portablen Einrichtungen zur Telekommunikation oder Datenverarbeitung sowie in Haushaltsgeräten beschrieben. Somit können die bereits oben erwähnten Vorteile in den angegebenen Verwendungsbereichen erzielt werden. Beispielsweise kann ein Handwerkzeug, insbesondere eine Bohrmaschine oder ein Bohrhammer, auf diese Weise vor Überhitzung geschützt werden, ohne dass aufwendige mathematische Berechnungen, welche kontinuierlich wiederholt werden müssen, notwendig sind. Gleiches gilt beispielsweise für einen Mixer als Haushaltsgerät.

Kurze Beschreibung der Zeichnungen

Vorteilhafte Ausführungsformen der Erfindung sind in den Figuren dargestellt und in der nachfolgenden Beschreibung näher ausgeführt.

Es zeigen:

Figur 1     ein Flussdiagramm des offenbarten Verfahrens gemäß einer ersten Ausführungsform;

Figur 2     ein Flussdiagramm des offenbarten Verfahrens gemäß einer zweiten Ausführungsform;

Figur 3     ein Flussdiagramm des offenbarten Verfahrens gemäß einer dritten Ausführungsform;

Figur 4     ein Flussdiagramm des offenbarten Verfahrens gemäß einer vierten Ausführungsform; und

Figur 5     ein Flussdiagramm des offenbarten Verfahrens gemäß einer fünften Ausführungsform.

Ausführungsformen der Erfindung

Gleiche Bezugszeichen bezeichnen in allen Figuren gleiche Vorrichtungskomponenten oder gleiche Verfahrensschritte.

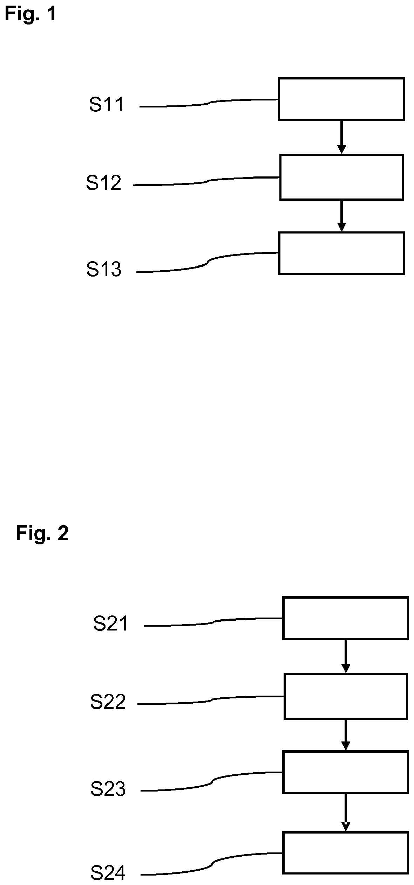

Figur 1 zeigt ein Flussdiagramm des offenbarten Verfahrens gemäß einer ersten Ausführungsform. In einem ersten Schritt S11 wird ein erster Temperaturwert aus einer erfassten ersten Temperaturgröße des elektrischen Energiespeichersystems ermittelt. Die Erfassung kann beispielsweise mittels eines Temperatursensors erfolgen. Anschließend wird in einem zweiten Schritt S12 ein elektrischer Stromwert in Abhängigkeit des ermittelten ersten Temperaturwertes, eines zweiten Temperaturwertes, eines elektrischen Widerstandswertes, eines Wärmekapazitätswertes und einer definierten Zeitspanne ermittelt. Dies erfolgt in vorteilhafter Weise unter Verwendung der Gleichung

$$[c_{cell}m_{cell}]\Delta T = I_{th}^2 R_{cell}\Delta t, \tag{1}$$

welche für eine elektrische Energiespeichereinheit gilt. Dabei gibt $c_{cell}$ einen Wärmekapazitätswert der elektrischen Energiespeichereinheit an, $m_{cell}$ den Wert der Masse der elektrischen Energiespeichereinheit, $\Delta t$ eine definierte Zeitspanne zwischen einem ersten und einem zweiten Zeitpunkt, $\Delta T$ eine Temperaturdifferenzwert, in vorteilhafter Weise zwischen einem vordefinierten Temperaturgrenzwert für eine elektrische Energiespeichereinheit und einem ersten Temperaturwert der elektrischen Energiespeichereinheit zu dem ersten Zeitpunkt, $I_{th}$ einen elektrischen Stromwert, der aus oder in die elektrische Energiespeichereinheit fließt, und $R_{cell}$ einen elektrischen Widerstandswert der elektrischen Energiespeichereinheit. Die nach $I_{th}$ umgestellte Gleichung (1) ermöglicht, beispielsweise bei Implementierung in einem Steuergerät, die Ermittlung des elektrischen Stromwertes $I_{th}$, wobei die übrigen Größen, beispielsweise $\Delta t$, von einem Nutzer oder innerhalb eines Steuerungsprogrammes vorgegeben sind oder aus einem Datenspeicher, welcher beispielsweise in einer elektronischen Steuereinheit vorhanden ist, ausgelesen werden. Alternativ können sie unmittelbar vor ihrer Verwendung in der Gleichung ermittelt werden, beispielsweise der elektrische Widerstandswert $R_{cell}$. Dies resultiert in der umgestellten Gleichung

$$\sqrt{[c_{cell}m_{cell}]\frac{\Delta T}{R_{cell}\Delta t}} = I_{th}. \tag{2}$$

Dieser ermittelte elektrische Stromwert $I_{th}$ wird in einem dritten Schritt S13 zum Betrieb des elektrischen Energiespeichersystems in der Weise verwendet, dass ein in dem elektrischen Energiespeichersystem fließender elektrischer Strom den ermittelten Stromwert $I_{th}$ zumindest während einer Teilzeitspanne der definierten Zeitspanne $\Delta t$, beispielsweise während der ersten Hälfte der Zeitspanne, nicht überschreitet. Beispielsweise können in einer bevorzugten Ausführungsform für eine elektrische Energiespeichereinheit der Wärmekapazitätswert $c_{cell}$, die Masse $m_{cell}$ und der elektrische Widerstandswert $R_{cell}$ aus einem Datenspeicher ermittelt werden, wo sie jeweils bevorzugt in Form eines Kennfeldes abgelegt sind. Der Temperaturdifferenzwert $\Delta T$ ermittelt sich bevorzugt aus $\Delta T = T_{lim} - T_1$, wobei $T_{lim}$ einen vordefinierten Temperaturgrenzwert für die elektrische Energiespeichereinheit bezeichnet, der ebenfalls aus dem Datenspeicher ermittelt werden kann. Der erste Temperaturwert $T_1$ gibt bevorzugt die Temperatur der elektrischen Energiespeichereinheit zum Ermittlungszeitpunkt des Stromwertes $I_{th}$ an, wobei auch ein ausgelesener Wert aus einem Datenspeicher möglich ist. Die definierte Zeitspanne $\Delta t$ gibt bevorzugt einen Zeitraum an, in dem die elektrische Energiespeichereinheit bis zu einer vordefinierten Spannungs- oder Ladezustandsgrenze entladen oder geladen werden kann.

Figur 2 zeigt ein Flussdiagramm des offenbarten Verfahrens gemäß einer zweiten Ausführungsform. Dabei wird in einem ersten Schritt S21, wie oben in dem Schritt S11 beschrieben, ein erster Temperaturwert aus einer erfassten ersten Temperaturgröße des elektrischen Energiespeichersystem ermittelt. In einem zweiten Schritt S22 wird ein Wärmetransportkennwert $R_{th}$ aus einem Datenspeicher ermittelt, der einen Wärmetransport innerhalb des elektrischen Energiespeichersystems zwischen einer elektrischen Energiespeichereinheit und deren Umgebung kennzeichnet. In einem dritten Schritt S23 erfolgt anschließend eine Ermittlung eines elektrischen Stromwertes $I_{th}$ in Abhängigkeit eines ersten Temperaturwertes $T_1$, eines zweiten Temperaturwertes $T_2$, eines elektrischen Widerstandswertes $R_{cell}$, eines elektrischen Wärmekapazitätswertes $c_{cell}$, einer definierten Zeitspanne $\Delta t$ und des ermittelten Wärmetransportkennwertes $R_{th}$, wobei $\Delta T = T_2 - T_1$ gilt und von nachstehender Gleichung ausgegangen wird.

$$\left[c_{cell}m_{cell} + \frac{\Delta t}{R_{th}}\right]\Delta T = I_{th}^2 R_{cell}\Delta t, \tag{3}$$

Nach Umstellung dieser Gleichung nach $I_{th}$ ergibt sich

$$\sqrt{\left[c_{cell}m_{cell} + \frac{\Delta t}{R_{th}}\right]\frac{\Delta T}{R_{cell}\Delta t}} = I_{th} \tag{4}$$

für den ermittelten Stromwert $I_{th}$. In einem vierten Schritt S24 wird das elektrische Energiespeichersystem derart betrieben, dass ein in dem elektrischen Energiespeichersystem fließender elektrischer Strom den ermittelten Stromwert $I_{th}$ während der definierten Zeitspanne $\Delta t$ nicht überschreitet. Da sowohl positive wie negative Ströme, also Lade- wie Entladeströme, zu einer Erwärmung der elektrischen Energiespeichereinheit führen, kann vorgesehen sein, dass der fließende elektrische Strom betragsmäßig den ermittelten Stromwert $I_{th}$ nicht überschreitet. Dies ist vorteilhaft, kann aber für jeden Anwendungsfall entschieden werden.

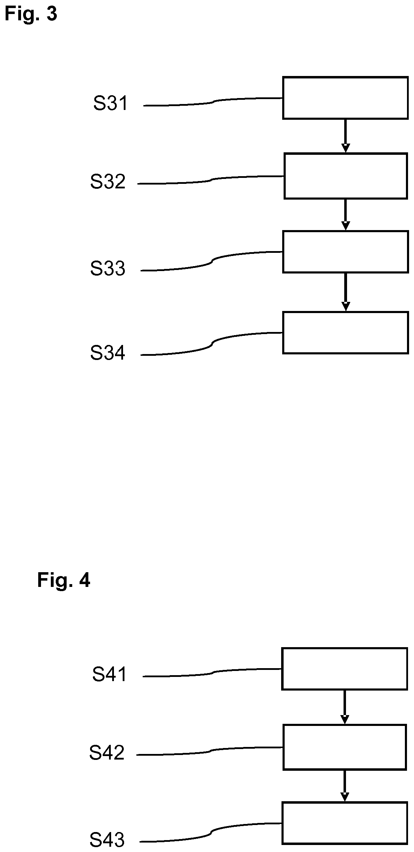

Figur 3 zeigt ein Flussdiagramm des offenbarten Verfahrens gemäß einer dritten Ausführungsform. In einem ersten Schritt S31 wird, wie bereits oben beschrieben, ein erster Temperaturwert aus einer erfassten ersten Temperaturgröße des elektrischen Energiespeichersystems ermittelt. Das Energiespeichersystem umfasst dabei mindestens eine elektrische Energiespeichereinheit. Anschließend wird in einem zweiten Schritt S32 eine verfügbare elektrische Ladungsmenge $c_{rem}$ des elektrischen Energiespeichersystems ermittelt, in diesem Fall die verfügbare elektrische Ladungsmenge $c_{rem}$ der elektrischen Energiespeichereinheit. Dies erfolgt durch eine Ermittlung eines aktuellen Ladezustandswertes der elektrischen Energiespeichereinheit und eine anschließende Differenzbildung mit einem minimal möglichen Ladezustandswert der elektrischen Energiespeichereinheit sowie anschließender Multiplikation mit einem nominalen beziehungsweise aktuellen Kapazitätswert der elektrischen Energiespeichereinheit, welcher beispielsweise aus einem Datenspeicher, beispielsweise mittels eines Kennfeldes, ermittelt werden kann. In einem dritten Schritt S33 wird anschließend unter Verwendung der ermittelten verfügbaren Ladungsmenge $c_{rem}$, eines ersten Temperaturwertes $T_1$, eines zweiten Temperaturwertes $T_2$, welcher aus einem Datenspeicher als vordefinierter Temperaturgrenzwert $T_{lim}$ für die elektrische Energiespeichereinheit ermittelt wird, eines elektrischen Widerstandswertes $R_{cell}$ der elektrischen Energiespeichereinheit, eines Wärmekapazitätswertes $c_{cell}$ der elektrischen Energiespeichereinheit ein elektrischer Stromwert $I_{th}$ ermittelt. Dabei werden folgende Definitionen verwendet: $\Delta t = c_{rem}/I_{th}$ sowie $\Delta T = T_{lim} - T_1$. Dies erfolgt unter Verwendung folgender Gleichung

$$[c_{cell}m_{cell}]\Delta T = I_{th}^2 R_{cell}\frac{c_{rem}}{I_{th}}, \tag{5}$$

woraus sich der ermittelte Stromwert $I_{th}$ ergibt zu

$$I_{th} = \frac{c_{cell}m_{cell}\Delta T}{R_{cell}c_{rem}}. \tag{6}$$

Alternativ kann zusätzlich ein Wärmetransportkennwert $R_{th}$ berücksichtigt werden, welcher beispielsweise den Wärmetransport zwischen der elektrischen Energiespeichereinheit und ihrer Umgebung charakterisiert. Dieser Wert kann beispielsweise aus einem Kennfeld in einem Datenspeicher ermittelt werden. Dann ergibt sich der ermittelte Stromwert $I_{th}$ zu

$$I_{th} = \frac{1}{2}[\frac{c_{cell}m_{cell}\Delta T}{R_{cell}c_{rem}} + \sqrt{\frac{c_{cell}^2 m_{cell}^2 \Delta T^2}{R_{cell}^2 c_{rem}^2} + \frac{4\Delta T}{R_{th}R_{cell}}}]. \tag{7}$$

In einem vierten Schritt S44 wird anschließend das elektrische Energiespeichersystem derart angesteuert, dass ein in dem elektrischen Energiespeichersystem fließender elektrischer Strom, vorteilhafter Weise ein Lade- oder Entladestrom, den ermittelten Stromwert betragsmäßig während des Betriebs des elektrischen Energiespeichersystem nicht überschreitet.

Figur 4 zeigt ein Flussdiagramm des offenbarten Verfahrens gemäß einer vierten Ausführungsform. In einem ersten Schritt S41 wird ein erster Temperaturwert aus einer erfassten ersten Temperaturgröße des elektrischen Energiespeichersystems, bevorzugt für eine elektrische Energiespeichereinheit des elektrischen Energiespeichersystems, ermittelt. In einem zweiten Schritt S42 wird ein elektrischer Stromwert in Abhängigkeit des ermittelten ersten Temperaturwertes $T_1$, eines vordefinierten Temperaturgrenzwertes $T_{lim}$ für die elektrische Energiespeichereinheit, eines elektrischen Widerstandswertes $R_{th}$ für die elektrische Energiespeichereinheit, eines Wärmekapazitätswertes $C_{cell}$ für die elektrische Energiespeichereinheit und einer definierten Zeitspanne $\Delta t$ ermittelt. Dabei werden der elektrische Widerstandswert $R_{th}$ und der Wärmekapazitätswert $C_{cell}$ für die elektrische Energiespeichereinheit aus einem Datenspeicher, beispielsweise einer elektronischen Steuereinheit, ermittelt. Anschließend wird das elektrische Energiespeichersystem in einem dritten Schritt S43 derart betrieben, dass ein in dem elektrischen Energiespeichersystem fließender elektrischer Strom den ermittelten Stromwert betragsmäßig zumindest während einer Teilzeitspanne der definierten Zeitspanne $\Delta t$ nicht überschreitet.

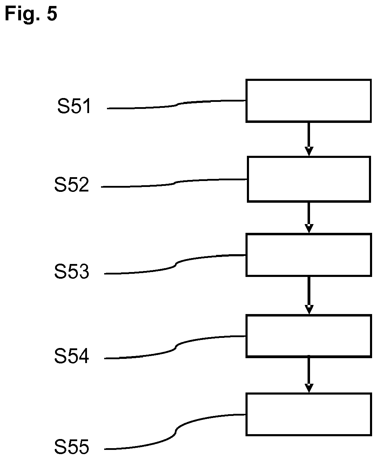

Figur 5 zeigt ein Flussdiagramm des offenbarten Verfahrens gemäß einer fünften Ausführungsform. Dabei wird in einem ersten Schritt S51 das elektrische Energiespeichersystem für einen vordefinierten Zeitraum derart angesteuert, dass in dem elektrischen Energiespeichersystem bis auf einen vordefinierten elektrischen Basisstrom, welcher betragsmäßig im Bereich von 0 bis 10 A liegt, bevorzugt im Bereich zwischen 0 bis 5 A, kein elektrischer Strom fließt. Anschließend wird in einem zweiten Schritt S52 eine zeitliche Temperaturänderungsrate aus einer mittels eines Temperatursensors erfassten ersten Temperaturgröße ermittelt. Der Temperatursensor befindet sich dabei innerhalb oder in direktem Kontakt mit dem elektrischen Energiespeichersystem beziehungsweise einer elektrischen Energiespeichereinheit. In einem dritten Schritt S53 wird überprüft, ob die zeitliche Temperaturänderungsrate einen vordefinierten Temperaturänderungsratenschwellenwert unterschreitet. Wird der Temperaturänderungsratenschwellenwert unterschritten, erfolgt eine Ermittlung eines ersten Temperaturwertes aus der erfassten ersten Temperaturgröße des elektrischen Energiespeichersystems. Anschließend wird in einem vierten Schritt S54, beispielsweise unter Verwendung von Gleichung (6) oder Gleichung (7), ein elektrischer Stromwert ermittelt. Anschließend wird in einem fünften Schritt S55 das elektrische Energiespeichersystem derart betrieben, dass ein in dem elektrischen Energiespeichersystem fließender elektrischer Strom, typischerweise ein während des Betriebs fließender Lade- beziehungsweise Entladestrom, betragsmäßig nicht überschritten wird.

Wenn sich in dem elektrischen Energiespeichersystem mehrere elektrische Energiespeichereinheiten befinden, die parallel geschaltet sind, kann unter der Annahme, dass sich alle Zellen der Parallelschaltung mehr oder weniger gleich verhalten, der Stromwert, welcher im Betrieb nicht überschritten werden darf, durch einfache Multiplikation mit der Anzahl der elektrischen Energiespeichereinheiten in Parallelschaltung aus dem oben ermittelten Stromwert $I_{th}$ berechnet werden.

**Patentansprüche**

1. Verfahren zum Betrieb eines elektrischen Energiespeichersystems, umfassend mindestens eine elektrische Energiespeichereinheit, mit den folgenden Schritten:

   a) Ermitteln eines ersten Temperaturwertes $T_1$ aus einer erfassten ersten Temperaturgröße des elektrischen Energiespeichersystems;
   b) Ermitteln eines Wärmetransportkennwertes $R_{th}$, welcher einen Wärmetransport innerhalb des elektrischen Energiespeichersystems kennzeichnet;
   Ermitteln eines elektrischen Stromwertes $It_h$ in Abhängigkeit des ermittelten ersten Temperaturwertes $T_1$, eines zweiten Temperaturwertes $T_2$, welcher aus einem Datenspeicher als vordefinierter Temperaturgrenzwert $T_{lim}$ für die elektrische Energiespeichereinheit und/oder für das elektrische Energiespeichersystem ermittelt wird, eines elektrischen Widerstandswertes $R_{cell}$, eines Wärmekapazitätswertes $C_{cell}$ und einer definierten Zeitspanne und des Wärmetransportkennwertes $R_{th}$ gemäß der Gleichung

$$I_{th} = \frac{1}{2}\left[\frac{c_{cell}m_{cell}\Delta T}{R_{cell}c_{rem}} + \sqrt{\frac{c_{cell}^2 m_{cell}^2 \Delta T^2}{R_{cell}^2 c_{rem}^2} + \frac{4\Delta T}{R_{th}R_{cell}}}\right];$$

   c) Betreiben des Energiespeichersystems derart, dass ein in dem elektrischen Energiespeichersystem fließender elektrischer Strom den ermittelten Stromwert $I_{th}$ zumindest während einer Teilzeitspanne der definierten Zeitspanne nicht überschreitet.

2. Verfahren gemäß einem der vorhergehenden Ansprüche, wobei der elektrische Widerstandswert $R_{cell}$ und/oder der Wärmekapazitätswert $C_{cell}$ für mindestens eine elektrische Energiespeichereinheit und/oder für das elektrische Energiespeichersystem ermittelt wird.

3. Verfahren gemäß einem der vorhergehenden Ansprüche, wobei weiterhin in Schritt b) zunächst ein Ermitteln einer verfügbaren elektrischen Ladungsmenge $c_{rem}$ des elektrischen Energiespeichersystems erfolgt, wobei dann das Ermitteln des elektrischen Stromwertes $I_{th}$ in Abhängigkeit des ersten Temperaturwertes $T_1$, des zweiten Temperaturwertes $T_2$, des elektrischen Widerstandswertes $R_{cell}$, des Wärmekapazitätswertes $c_{cell}$ und der verfügbaren Ladungsmenge $c_{rem}$ erfolgt.

4. Verfahren gemäß einem der vorhergehenden Ansprüche, wobei im Schritt a) der erste Temperaturwert $T_1$ aus der mittels eines Temperatursensors erfassten ersten Temperaturgröße ermittelt wird und wobei sich der Temperatursensor innerhalb oder in direktem Kontakt mit dem elektrischen Energiespeichersystem befindet.

**5.** Verfahren gemäß einem der vorhergehenden Ansprüche, wobei im Schritt a) vor der Ermittlung des ersten Temperaturwertes $T_1$ das elektrische Energiespeichersystem für einen vordefinierten Zeitraum derart angesteuert wird, dass in dem elektrischen Energiespeichersystem bis auf einen vordefinierten elektrischen Basisstrom kein elektrischer Strom fließt.

**6.** Verfahren gemäß einem der Ansprüche 5 oder 6, weiterhin umfassend folgende Schritte:

d) Ermitteln einer zeitlichen Temperaturänderungsrate aus der erfassten ersten Temperaturgröße;
e) Bei Unterschreiten eines vordefinierten Temperaturänderungsratenschwellenwertes durch die ermittelte zeitliche Temperaturänderungsrate Ermitteln des ersten Temperaturwertes $T_1$;

**7.** Vorrichtung zum Betrieb eines elektrischen Energiespeichersystems, umfassend Mittel, insbesondere ein elektronisches Batteriemanagementsteuergerät, die eingerichtet sind, die Schritte des Verfahrens nach einem der Ansprüche 1 bis 6 durchzuführen.

**8.** Eletrisches Energiespeichersystem, umfassend mindestens eine elektrische Energiespeichereinheit und eine Vorrichtung gemäß Anspruch 7.

**9.** Verwendung eines elektrischen Energiespeichersystems gemäß Anspruch 8 in elektrisch angetriebenen Fahrzeugen einschließlich Hybridfahrzeugen, in stationären elektrischen Energiespeicheranlagen, in elektrisch betriebenen Handwerkzeugen, in portablen Einrichtungen zur Telekommunikation oder Datenverarbeitung sowie in Haushaltsgeräten.

## Claims

**1.** Method for operating an electrical energy storage system, comprising at least one electrical energy storage unit, comprising the follow steps:

a) identifying a first temperature value $T_1$ from a detected first temperature variable of the electrical energy storage system;
b) identifying a heat transfer characteristic value $R_{th}$, which denotes a heat transfer within the electrical energy storage system;

identifying an electric current value $I_{th}$ as a function of the identified first temperature value $T_1$, a second temperature value $T_2$, which is identified from a data memory as a predefined temperature limit value $T_{lim}$ for the electrical energy storage unit and/or for the electrical energy storage system, an electrical resistance value $R_{cell}$, a thermal capacity value $c_{cell}$ and a defined interval and the heat transfer characteristic value $R_{th}$ according to

the equation $$I_{th} = \frac{1}{2}\left[\frac{c_{cell}m_{cell}\Delta T}{R_{cell}c_{rem}} + \sqrt{\frac{c_{cell}^2 m_{cell}^2 \Delta T^2}{R_{cell}^2 c_{rem}^2} + \frac{4\Delta T}{R_{th}R_{cell}}}\right];$$

c) operating the energy storage system in such a way that an electric current flowing in the electrical energy storage system does not exceed the identified current value $I_{th}$ at least during a partial interval of the defined interval.

**2.** Method according to one of the preceding claims, wherein the electrical resistance value $R_{cell}$ and/or the thermal capacity value $c_{cell}$ is identified for at least one electrical energy storage unit and/or for the electrical energy storage system.

**3.** Method according to either of the preceding claims, wherein, furthermore, in step b), first an available amount of electrical charge $c_{rem}$ of the electrical energy storage system is identified, wherein the electric current value $I_{th}$ is then identified as a function of the first temperature value $T_1$, the second temperature value $T_2$, the electrical resistance value $R_{cell}$, the thermal capacity value $c_{cell}$ and the available amount of charge $c_{rem}$.

**4.** Method according to one of the preceding claims, wherein, in step a), the first temperature value $T_1$ is identified from the first temperature variable detected by means of a temperature sensor and wherein the temperature sensor is located within or in direct contact with the electrical energy storage system.

5. Method according to one of the preceding claims, wherein, in step a), before the identification of the first temperature value $T_1$, the electrical energy storage system is actuated for a predefined period in such a way that no electric current flows in the electrical energy storage system except for a predefined electric base current.

6. Method according to either of Claims 5 and 6, furthermore comprising the following steps:

d) identifying a rate of temperature change over time from the detected first temperature variable;
e) identifying the first temperature value $T_1$ when a predefined rate of temperature change threshold value is undershot by the identified rate of temperature change over time.

7. Apparatus for operating an electrical energy storage system, comprising means, in particular an electronic battery management controller, which are set up to carry out the steps of the method according to one of Claims 1 to 6.

8. Electrical energy storage system, comprising at least one electrical energy storage unit and an apparatus according to Claim 7.

9. Use of an electrical energy storage system according to Claim 8 in electrically driven vehicles, including hybrid vehicles, in stationary electrical energy storage installations, in electrically operated hand tools, in portable devices for telecommunications or data processing and in domestic appliances.

**Revendications**

1. Procédé pour faire fonctionner un système accumulateur d'énergie électrique, comprenant au moins une unité d'accumulation d'énergie électrique, comprenant les étapes consistant à :

a) déterminer une première valeur de température $T_1$ à partir d'une première grandeur de température détectée du système accumulateur d'énergie électrique ;
b) déterminer une valeur caractéristique de transport de chaleur $R_{th}$, qui caractérise un transport de chaleur à l'intérieur du système accumulateur d'énergie électrique ;
déterminer une valeur de courant électrique $I_{th}$ en fonction de la première valeur de température déterminée $T_1$, d'une deuxième valeur de température $T_2$, qui est déterminée à partir d'une mémoire de données en tant que valeur limite de température prédéfinie $T_{lim}$ pour l'unité d'accumulation d'énergie électrique et/ou pour le système accumulateur d'énergie électrique, d'une valeur de résistance électrique $R_{cell}$, d'une valeur de capacité thermique $C_{cell}$ et d'un intervalle de temps défini et de la valeur caractéristique de transport de chaleur $R_{th}$ selon

l'équation $I_{th} = \frac{1}{2}\left[\frac{c_{cell}m_{cell}\Delta T}{R_{cell}c_{rem}} + \sqrt{\frac{c_{cell}^2 m_{cell}^2 \Delta T^2}{R_{cell}^2 c_{rem}^2} + \frac{4\Delta T}{R_{th}R_{cell}}}\right]$ ;

c) faire fonctionner le système accumulateur d'énergie de telle manière qu'un courant électrique circulant dans le système accumulateur d'énergie électrique ne dépasse pas la valeur de courant déterminée $I_{th}$ au moins pendant une partie de l'intervalle de temps défini.

2. Procédé selon l'une quelconque des revendications précédentes, dans lequel la valeur de résistance électrique $R_{cell}$ et/ou la valeur de capacité thermique $c_{cell}$ est déterminée pour au moins une unité d'accumulation d'énergie électrique et/ou pour le système accumulateur d'énergie électrique.

3. Procédé selon l'une quelconque des revendications précédentes, dans lequel, à l'étape b), une détermination d'une quantité de charge électrique disponible $c_{rem}$ du système accumulateur d'énergie électrique est tout d'abord effectuée, dans lequel la détermination de la valeur de courant électrique $I_{th}$ en fonction de la première valeur de température $T_1$, de la deuxième valeur de température $T_2$, de la valeur de résistance électrique $R_{cell}$, de la valeur de capacité thermique $C_{cell}$ et de la quantité de charge disponible $C_{rem}$ est ensuite effectuée.

4. Procédé selon l'une quelconque des revendications précédentes, dans lequel, à l'étape a), la première valeur de température $T_1$ est déterminée à partir de la première grandeur de température détectée au moyen d'un capteur de température et dans lequel le capteur de température est situé à l'intérieur du système accumulateur d'énergie électrique ou en contact direct avec celui-ci.

5. Procédé selon l'une quelconque des revendications précédentes, dans lequel, à l'étape a), avant la détermination de la première valeur de température $T_1$, le système accumulateur d'énergie électrique est commandé pendant une période de temps prédéfinie de telle manière qu'aucun courant électrique ne circule dans le système accumulateur d'énergie électrique, à l'exception d'un courant électrique de base prédéfini.

6. Procédé selon l'une quelconque des revendications 5 ou 6, comprenant en outre les étapes consistant à :

    d) déterminer un taux de variation de la température dans le temps à partir de la première grandeur de température détectée ;
    e) si le taux de variation de température dans le temps déterminé est inférieur à un seuil de taux de variation de température prédéfini, déterminer la première valeur de température $T_1$.

7. Dispositif pour faire fonctionner un système accumulateur d'énergie électrique, comprenant des moyens, notamment un contrôleur électronique de gestion de batterie, conçus pour réaliser les étapes du procédé selon l'une quelconque des revendications 1 à 6.

8. Système accumulateur d'énergie électrique, comprenant au moins une unité d'accumulation d'énergie électrique et un dispositif selon la revendication 7.

9. Utilisation d'un système accumulateur d'énergie électrique selon la revendication 8 dans des véhicules à propulsion électrique, y compris des véhicules hybrides, dans des installations fixes d'accumulation d'énergie électrique, dans des outils portatifs à entraînement électrique, dans des équipements portatifs de télécommunications ou de traitement de données, et dans des appareils ménagers.

**Fig. 1**

S11 ⎯⎯⎯⎯⎯⎯⎯⎯⎯ [ ]

S12 ⎯⎯⎯⎯⎯⎯⎯⎯⎯ [ ]

S13 ⎯⎯⎯⎯⎯⎯⎯⎯⎯ [ ]

**Fig. 2**

S21 ⎯⎯⎯⎯⎯⎯⎯⎯⎯ [ ]

S22 ⎯⎯⎯⎯⎯⎯⎯⎯⎯ [ ]

S23 ⎯⎯⎯⎯⎯⎯⎯⎯⎯ [ ]

S24 ⎯⎯⎯⎯⎯⎯⎯⎯⎯ [ ]

**Fig. 3**

S31 ⸺

S32 ⸺

S33 ⸺

S34 ⸺

**Fig. 4**

S41 ⸺

S42 ⸺

S43 ⸺

**Fig. 5**

S51

S52

S53

S54

S55

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013000220 B3
- EP 1688722 A
- DE 102015001069
- DE 4403468